# EUROPEAN PATENT SPECIFICATION

(11) **EP 2 988 203 B1**
(45) Date of publication and mention of the grant of the patent: **04.07.2018**
(21) Application number: 15181895.2
(22) Date of filing: 21.08.2015
(51) Int. Cl.: G06F 3/0488, G06F 3/0489

(54) **METHOD AND DEVICE FOR POSITIONING CURSOR**
VERFAHREN UND VORRICHTUNG ZUR POSITIONIERUNG EINES CURSORS
PROCÉDÉ ET DISPOSITIF DE POSITIONNEMENT D'UN CURSEUR

(30) Priority: 21.08.2014 CN 201410416076
(43) Date of publication of application: 24.02.2016
(73) Proprietor: Xiaomi Inc., Beijing 100085 (CN)
(72) Inventor: GAO, Yi, 100085 Beijing (CN); WANG, Hongqiang, 100085 Beijing (CN); LONG, Hai, 100085 Beijing (CN)
(74) Representative: Delumeau, François Guy

(56) References cited:
- US-A1- 2010 235 726
- US-A1- 2011 239 153
- US-A1- 2011 310 026
- US-A1- 2013 111 338
- US-A1- 2013 147 708
- US-A1- 2014 026 055
- US-B1- 6 411 283
- US-B1- 7 203 903

## Description

### TECHNICAL FIELD

The invention relates to the technical field of electronic devices and, more particularly, to a method and a device for positioning a cursor.

### BACKGROUND

In the prior art, when an apparatus having a touch screen is used to input contents such as characters or pictures in an input box, the left edge of the input contents will be close to the left side of the input box, so that it is difficult for a user to tap between the left edge of the input contents and the left side of the input box to position a cursor. Similarly, when a full line of contents is inputted into the input box, the right edge of the input contents is close to the right side of the input box, so that it is difficult for the user to tap between the right edge of the input contents and the right side of the input box to position the cursor. It is apparent that in the prior art it is difficult to position a cursor between a side of the input box and an adjacent side edge of the input contents.
Document US 7,203,903 B1 discloses a system for spacing, storing and recognizing electronic representations of handwriting and printing.

Document US 2010/0235726 A1 relates to a content magnifier used to position an insertion marker in a text input box.

Document US 6,411,283 B1 relates to a computer touch screen adapted to facilitate selection of features at the edge of the screen.

Document US 2013/0147708 A1 relates to a method for inserting a new line in a text on a touch-enabled device in response to a pinch gesture.

### SUMMARY

In order to overcome the problems in the prior art, embodiments of the invention provide a method and a device for positioning a cursor, which is configured to conveniently operate to position (or put) a cursor between a side of the input box and an adjacent side edge of the input contents.

According to a first aspect of the invention, there is provided a method for positioning a cursor, comprising steps of:
when a first touch operation aiming at an input box on a display interface of a touch screen is detected, determining contents in the input box aimed at by the first touch operation and a first operating distance, a first operating direction of the first touch operation being consistent with an arraying direction of the contents;
moving the contents by a distance corresponding to the first operating distance along the first operating direction to form a blank space between a side of the input box and an adjacent side edge of the contents; and
when a second touch operation aiming at the blank space is detected, positioning the cursor in the position of the blank space.

In one embodiment, the method may further comprise steps of :
when a third touch operation aiming at the contents is detected, determining a second operating direction and a second operating distance of the third touch operation; and
when the second operating direction is opposite to the first operating direction, moving the contents by a distance corresponding to the second operating distance along the second operating direction to reduce the blank space.

In one embodiment, the method may further comprise a step of:
adding a temporary display box in the display interface of the touch screen, and adding, a part of the contents exceeding a display range of the input box after moving the contents, into the temporary display box for display; or a step of
automatically shifting, a part of the contents exceeding the display range of the input box after moving the contents, to next line in the input box.

In one embodiment, the method may further comprise a step of:
when adding contents into the position of the cursor, adding, a corresponding part of the contents exceeding the display range of the input box according to the added contents, into the temporary display box for display; or a step of,
when deleting contents from the position of the cursor, removing, a corresponding part of the contents entering the display range of the input box according to the deleted contents, out of the temporary display box.

In one embodiment, the method may further comprise a step of:
when adding contents into the position of the cursor, automatically shifting, a corresponding part of the contents exceeding the display range of the input box according to the added contents, to the next line in the input box; or a step of
when deleting contents from the position of the cursor, removing, a corresponding part of the contents moving into the line of the cursor according to the deleted contents, out of the next line in the input box.

In one embodiment, the step of moving the contents by the distance corresponding to the first operating distance along the first operating direction may further comprise steps of:
when the first operating direction is less than a first preset distance, moving the contents by the first operating direction along the first operating direction; and
when the first operating direction is not less than the first preset distance, moving the contents by the first preset distance along the first operating direction;
wherein the first preset distance is equal to a product of the width of the input box in the first operating direction and a preset percentage ratio.

According to a second aspect of the invention, there is provided a device for positioning a cursor, the device having a touch screen, comprising:
a first detection module configured to, when a first touch operation aiming at an input box on a display interface of the touch screen is detected, determine contents in the input box aimed by the first touch operation and a first operating distance, a first operating direction of the first touch operation being consistent with an arraying direction of the contents;
a first moving module configured to move the contents by a distance corresponding to the first operating distance along the first operating direction to form a blank space between a side of the input box and an adjacent side edge of the contents; and
a positioning module configured to, when a second touch operation aiming at the blank space is detected, position the cursor in the position of the blank space.

In one embodiment, the device may further comprise:
a second detection module configured to, when a third touch operation aiming at the contents is detected, determine a second operating direction and a second operating distance of the third touch operation; and
a second moving module configured to, when the second operating direction is opposite to the first operating direction, move the contents by a distance corresponding to the second operating distance along the second operating direction to reduce the blank space.

In one embodiment, the device may further comprise:
a first addition module configured to add a temporary display box in the display interface of the touch screen, and add, a part of the contents exceeding a display range of the input box after moving the contents, into the temporary display box for display, or
a first linefeed module configured to automatically shift, a part of the contents exceeding a display range of the input box after moving the contents, to next line in the input box.

In one embodiment, the device may further comprise:
a second addition module configured to, when adding contents into the position of the cursor, add, a corresponding part of the contents exceeding the display range of the input box according to the added contents, into the temporary display box for display; or,
a first removal module configured to, when deleting contents from the position of the cursor, remove, a corresponding part of the contents entering the display range of the input box according to the deleted contents, out of the temporary display box.

In one embodiment, the device may further comprise:
a second linefeed module configured to, when adding contents into the position of the cursor, automatically shift, a corresponding part of the contents exceeding the display range of the input box according to the added contents, to the next line in the input box; or
a second removal module configured to, when deleting contents from the position of the cursor, remove a corresponding part of the contents moving into the line of the cursor according to the deleted contents, out of the next line in the input box.

In one embodiment, the first moving module may further comprise:
a first moving submodule configured to, when the first operating distance is less than a first preset distance, move the contents by the first operating distance along the first operating direction; and
a second moving submodule configured to, when the first operating distance is not less than the first preset distance, move the contents by the first preset distance along the first operating direction;
wherein the first preset distance is equal to a product of the width of the input box in the first operating direction and a preset percentage ratio.

According to a third aspect of the invention, there is provided a device for positioning a cursor in an input box, including:
a processor; and
a memory for storing instructions executable by the processor;
wherein the processor is configured to:
   when a first touch operation aiming at the input box on a display interface of the touch screen is detected, determine contents in the input box aimed by the first touch operation and a first operating distance, a first operating direction of the first touch operation being consistent with an arraying direction of the contents;
   move the contents by a distance corresponding to the first operating distance along the first operating direction to form a blank space between a side of the input box and a side edge of the contents; and
   when a second touch operation aiming at the blank space is detected, position the cursor in the position of the blank space.

A computer program is provided according to a fourth aspect of the invention. The computer program performs the steps of the method for positioning a cursor when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

In a particular embodiment, the information medium can be an integrated circuit in which the program is incorporated, the circuit being adapted to execute the method in question or to be used in its execution.

The technical solutions provided by the embodiments of the invention may include the following advantageous effects: the distance between the side of the input box and the side edge of the input contents is increased according to the detected first touch operation, and the cursor is positioned in the blank space between the side of the input box and the side edge of the input contents according to the second touch operation, so that it is convenient for a user to operate between the side of the input box and the side edge of the input contents, and is also convenient for the user to position the cursor between the side of the input box and the side edge of the input contents.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for positioning a cursor, according to an exemplary embodiment.
Fig. 2 is a flow chart of a method for positioning a cursor, according to an exemplary embodiment.
Fig. 3 is a flow chart of a method for positioning a cursor, according to an exemplary embodiment.
Fig. 4A is a flow chart of a method for positioning a cursor, according to an exemplary embodiment.
Fig. 4B is a scene view of a method for positioning a cursor, according to an exemplary embodiment.
Fig. 5 is a block diagram of a device for positioning a cursor, according to an exemplary embodiment.
Fig. 6 is a block diagram of a device for positioning a cursor, according to an exemplary embodiment.
Fig. 7A is a block diagram of a device for positioning a cursor, according to an exemplary embodiment.
Fig. 7B is a block diagram of a device for positioning a cursor, according to an exemplary embodiment.
Fig. 8A is a block diagram of a device for positioning a cursor, according to an exemplary embodiment.
Fig. 8B is a block diagram of a device for positioning a cursor, according to an exemplary embodiment.
Fig. 9 is a block diagram of a device adapted for positioning a cursor, according to an exemplary embodiment.

### DETAILED DESCRIPTION

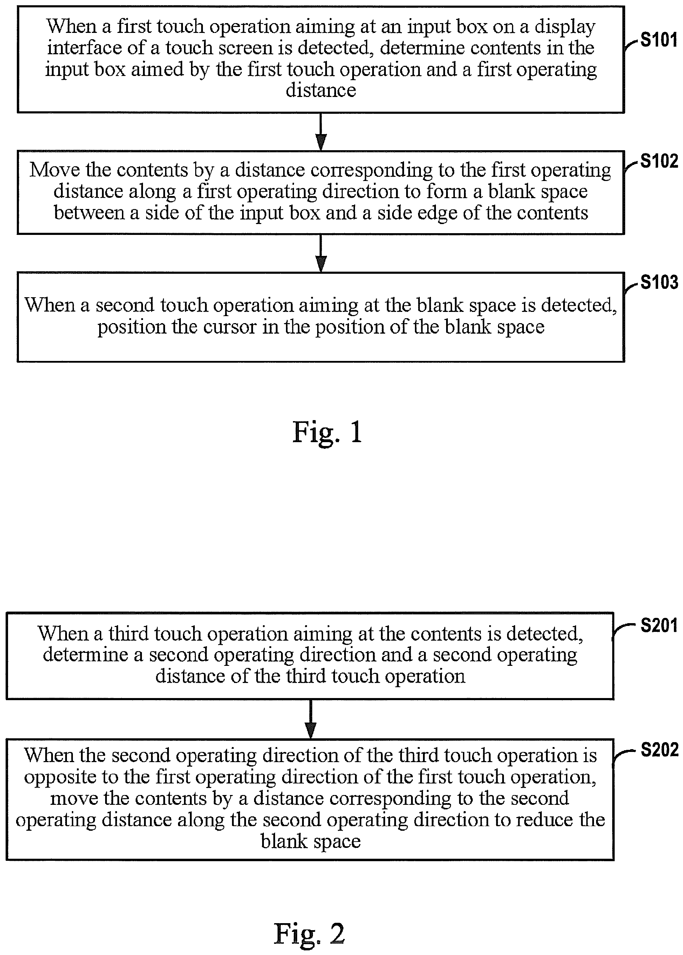

Fig. 1 is a flow chart of a method for positioning a cursor in an input box, according to an exemplary embodiment. As shown in Fig. 1, the method for positioning a cursor is applied in an apparatus having a touch screen, such as a mobile phone, a tablet and so on, including the following steps of S101-S103.

In step S101, when a first touch operation aiming at an input box on a display interface of the touch screen is detected, contents in the input box aimed by the first touch operation and a first operating distance are determined.

Wherein, a first operating direction of the first touch operation is consistent with an arraying direction of the contents.

For instance, when the contents are arrayed or arranged in the input box in a transverse direction, the first operating direction of the first touch operation is consistent with the arraying direction of the contents, for example, the first operating direction is a left-right direction; and when contents are arrayed or arranged in the input box in a vertical direction, the first operating direction of the first touch operation is consistent with the arraying direction of the contents, for example, the first operating direction is an up-down direction.

In one embodiment, when a first touch operation is conducted in the input box of the touch screen, an inductor on the touch screen senses the first touch operation and sends a signal to a processor of the apparatus to notify it of the sensed information; then the processor determines positions of the starting point and the ending point of the first touch operation according to the received information, and obtains a first operating distance of the first touch operation according to the determined positions.

The contents in the input box aimed by the first touch operation may be determined according to one of the positions of the starting and the ending points of the first touch operation. For example, the contents in the input box aimed by the first touch operation may either be contents in a line comprising the operation starting point or the operation ending point, or be contents in a range of *n* lines that are above and below the line comprising the operation starting point or the operation ending point, wherein *n* is a preset positive integer. Or, the contents in the input box aimed by the first touch operation may be determined according to the both positions of the starting and ending points of the first touch operation. For instance, the contents in the input box aimed by the first touch operation may be the contents between the starting point and the ending point of the first touch operation.

In step S102, the contents are moved by a distance corresponding to the first operating distance along the first operating direction to form a blank space between a side of the input box and a side edge of the contents. The side of the input box and the side edge of the contents are adjacent.

The contents in the input box mentioned above may be characters, pictures or combinations of characters and pictures, etc., which will not be specially limited in the invention.

A side edge of the contents in the input box refers to a boundary of a region within which the contents are located, for example, a boundary of a region displayed when a selection operation is performed on the contents in the input box.

In one embodiment, the step S102 may be implemented as: when the first operating distance is less than a first preset distance, the contents are moved by the first operating distance along the first operating direction; and when the first operating distance is not less than the first preset distance, the contents are moved by the first preset distance along the first operating direction, the first preset distance being equal to a product of the width of the input box in the first operating direction and a preset percentage ratio.

For example, the first touch operation is swiping from left to right, the first operating direction is from left to right, the first operating distance is S1 the width of the input box in the left-right direction is W, and the preset percentage ratio is 20%; when S1<W*20%, the contents are moved by S1 along the direction from left to right; and when S1≥W*20%, the contents are moved by W*20% along the direction from left to right. Then, a blank space is formed between the left side of the input box and the left edge of the contents.

For another example, the first touch operation is swiping from right to left, the first operating direction is from right to left, the first operating distance is S1, the width of the input box in the left-right direction is W, and the preset percentage ratio is 20%; when S1<W*20%, the contents are moved by S1 along the direction from right to left; and when S1≥W*20%, the contents are moved by W*20% along the direction from right to left. Then, a blank space is formed between the right side of the input box and the right edge of the contents.

For example, the first touch operation is swiping from up to down, the first operating direction is from up to down, the first operating distance is S1, the width of the input box in the up-down direction is H, and the preset percentage ratio is 20%; when S1<H*20%, the contents are moved by S1 along the direction from up to down; and when S1≥H*20%, the contents are moved by H*20% along the direction from up to down. Then, a blank space is formed between the upside of the input box and the upside edge of the contents.

For another example, the first touch operation is swiping from down to up, the first operating direction is from down to up, the first operating distance is S1, the width of the input box in the up-down direction is H, and the preset percentage ratio is 20%; when S1<H*20%, the contents are moved by S1 along the direction from down to up; and when S1≥H*20%, the contents are moved by H*20% along the direction from down to up. Then, a blank space is formed between the downside of the input box and the downside edge of the contents.

The embodiments have the advantageous effects of ensuring that the ratio of the moved distance of the contents to the width of the input box is not greater than the preset percentage ratio, and the contents in the input box while moving are prevented from being entirely moved out of the input box due to the excessive swiping distance of the first touch operation.

In one embodiment, the contents in the input box aimed by the first touch operation are determined to be contents in the line comprising the starting point of the first touch operation.

For instance, the step S102 may be implemented as: the contents in the line comprising the starting point of the first touch operation are moved by a distance corresponding to the first operating distance along the first operating direction to form a blank space between a side of the input box and an adjacent side edge of the contents in the line of the operation starting point (i.e. the line comprising the operation starting point).

For example, the first touch operation is swiping from left to right, the first operating direction is from left to right, the first operating distance is S1, the width of the input box in the left-right direction is W, the preset percentage ratio is 20%, and the line of the operation starting point of the first touch operation is the *i*^{th} line. When S1<W*20%, the contents of the *i*^{th} line are moved by S1 along the direction from left to right; and when S1≥W*20%, the contents of the *i*^{th} line are moved by W*20% along the direction from left to right. Then, a blank space is formed between the left side of the input box and the left edge of the contents of the *i*^{th} line.

For another example, the first touch operation is swiping from right to left, the first operating direction is from right to left, the first operating distance is S1, the width of the input box in the left-right direction is W, the preset percentage ratio is 20%, and the line of the operation starting point of the first touch operation is the *i*^{th} line. When S1<W*20%, the contents of the *i*^{th} line are moved by S1 along the direction from right to left; and when S1≥W*20%, the contents of the *i*^{th} line are moved by W*20% along the direction from right to left. Then, a blank space is formed between the right side of the input box and the right edge of the contents of the *i*^{th} line.

For example, the first touch operation is swiping from up to down, the first operating direction is from up to down, the first operating distance is S1, the width of the input box in the up-down direction is H, the preset percentage ratio is 20%, and the line of the operation starting point of the first touch operation is the *i*^{th} row. When S1<H*20%, the contents in the *i*^{th} row are moved by S1 along the direction from up to down; and when S1≥H*20%, the contents in the *i*^{th} row are moved by H*20% along the direction from up to down. Then, a blank space is formed between the upside of the input box and the upside edge of the contents in the *i*^{th} row.

For another example, the first touch operation is swiping from down to up, the first operating direction is from down to up, the first operating distance is S1, the width of the input box in the up-down direction is H, the preset percentage ratio is 20%, and the line of the operation starting point of the first touch operation is the *j*^{th} row. When S1<H*20%, the contents in the *i*^{th} row are moved by S1 along the direction from down to up; and when S1≥H*20%, the contents in the *i*^{th} row are moved by H*20% along the direction from down to up. Then, a blank space is formed between the downside of the input box and the downside edge of the contents in the *i*^{th} row.

The implementation manners in the embodiments are exemplary only, and the implementation manners of the invention are not limited thereto. For example, the contents in a range of *n* lines above and below the line of the operation starting point of the first touch operation may be determined as the contents in the input box aimed by the first touch operation, wherein *n* is a preset positive integer. In step S102, the contents in (2n+1) lines are entirely moved by a distance corresponding to the first operating distance along the first operating direction.

In step S103, when a second touch operation aiming at the blank space is detected, the cursor is positioned in the position of the blank space.

In one embodiment, the step S103 may either be implemented as to position (or put) the cursor at any position in the blank space between a side of the input box and an adjacent side edge of the contents, or be implemented as to position the cursor at the operating position of the second touch operation in the blank space between a side of the input box and an adjacent side edge of the contents.

The technical solutions provided by the embodiments of the invention may include the following advantageous effects: the distance between a side of the input box and side edge of the input contents is increased according to the detected first touch operation, and the cursor is positioned in the blank space between the side of the input box and the side edge of the input contents according to the second touch operation, so that it is convenient for a user to operate between the side of the input box and the side edge of the input contents, and is also convenient for the user to position the cursor between the side of the input box and the side edge of the input contents.

Fig. 2 is a flow chart of a method for positioning a cursor, according to an exemplary embodiment. As shown in Fig. 2, the method for positioning a cursor is applied in an apparatus having a touch screen, such as a mobile phone and a table. After the foregoing steps S101-S103, the method may further include the following steps.

In step S201, when a third touch operation aiming at the contents is detected, a second operating direction and a second operating distance of the third touch operation are determined.

The exemplary implementation manners for determining the second operating direction and the second operating distance of the third touch operation are as shown in step S101, which will not be elaborated herein.

In step S202, when the second operating direction of the third touch operation is opposite to the first operating direction of the first touch operation, the contents are moved by a distance corresponding to the second operating distance along the second operating direction to reduce the blank space.

In one embodiment, the step S202 may be implemented as: when the second operating distance is less than a distance (i.e. the length) of the blank space, the contents are moved by the second operating distance along the second operating direction; and when the second operating distance is not less than the distance of the blank space, the contents are moved by the distance of the blank space along the second operating direction.

The first touch operation is swiping from left to right, the third touch operation is swiping from right to left, the distance of the blank space between the left side of the input box and the left edge of the contents is D1, and the second operating distance of the third touch operation is S2; when S2<D1, the contents are moved by S2 along the direction from right to left; and when S2≥D1, the contents are moved by D1 along the direction from right to left.

For another example, the first touch operation is swiping from right to left, the third touch operation is swiping from left to right, the distance of the blank space between the right side of the input box and the right edge of the contents is D1, and the second operating distance of the third touch operation is S2; when S2<D1, the contents are moved by S2 along the direction from left to right; and when S2≥D1, the contents are moved by D1 along the direction from left to right.

The first touch operation is swiping from up to down, the third touch operation is swiping from down to up, the distance of the blank space between the upside of the input box and the upside edge of the contents is D1, and the second operating distance of the third touch operation is S2; when S2<D1, the contents are moved by S2 along the direction from down to up; and when S2≥D1, the contents are moved by D1 along the direction from down to up.

For another example, the first touch operation is swiping from down to up, the third touch operation is swiping from up to down, the distance of the blank space between the downside of the input box and the downside edge of the contents is D1, and the second operating distance of the third touch operation is S2; when S2<D1, the contents are moved by S2 along the direction from up to down; and when S2≥D1, the contents are moved by D1 along the direction from up to down.

The technical solutions provided by the embodiments of the invention may include the following advantageous effects: the distance between the side of the input box and the side edge of the contents in the input box is reduced via the swipe operation, thus the contents displayed in the input box are increased, which is convenient for a user to read the contents in the input box.

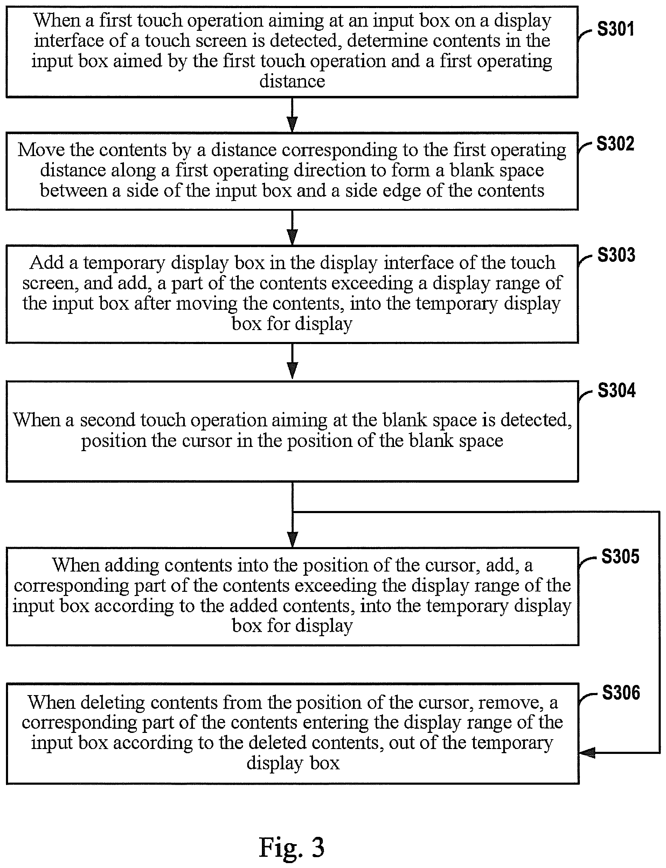

Fig. 3 is a flow chart of a method for positioning a cursor, according to an exemplary embodiment. As shown in Fig. 3, the method for positioning a cursor is applied in an apparatus having a touch screen, such as a mobile phone and a tablet, including the following steps.

In step S301, when a first touch operation aiming at an input box on a display interface of the touch screen is detected, contents in the input box aimed by the first touch operation and a first operating distance are determined.

A first operating direction of the first touch operation is consistent with an arraying direction of the contents.

The exemplary implementation manner of step S301 is as shown in the detailed descriptions of step S101, which will not be elaborated herein.

In step S302, the contents are moved by a distance corresponding to the first operating distance along the first operating direction to form a blank space between a side of the input box and an adjacent side edge of the contents.

The exemplary implementation manner of step S302 is as shown in the detailed descriptions of step S102, which will not be elaborated herein.

In step S303, a temporary display box is added in the display interface of the touch screen, and a part of the contents exceeding a display range of the input box after moving the contents is added into the temporary display box for display.

In one embodiment, the temporary display box may be a bubble.

For example, in the case that the first touch operation is an operation from left to right, a bubble is added at the end of the contents, and the part of the contents exceeding the right side edge of the input box after moving the contents is added into the bubble.

Moreover, the invention may include: when the space between the side of the input box and the side edge of the contents in the input box is reduced, removing, a corresponding part which would enter the display range of the input box, out of the temporary display box.

A substitutive implementation manner of the foregoing step S303 is: automatically shifting the corresponding part exceeding the display range of the input box to next line in the input box.

In step S304, when a second touch operation aiming at the blank space is detected, the cursor is positioned in the position of the blank space.

The exemplary implementation manner of step S304 is as shown in the detailed descriptions of step S103, which will not be elaborated herein.

In step S305, when adding contents in the position of the cursor, a corresponding part of the contents exceeding the display range of the input box according to the added contents is added into the temporary display box for display.

In one embodiment, the temporary display box may be a bubble.

For example, when adding contents in the position of the cursor, the corresponding part exceeding the display range of the input box according to the added contents is added into the bubble for display.

A substitutive implementation manner of the foregoing step S305 is: when adding contents in the position of the cursor, automatically shifting the corresponding part exceeding the display range of the input box to next line in the input box.

In step S306, when deleting contents from the position of the cursor, a corresponding part which would enter the display range of the input box according to the deleted contents is removed out of the temporary display box.

In one embodiment, the temporary display box may be a bubble.

When deleting contents from the position of the cursor, the corresponding part entering the display range of the input box according to the deleted contents is removed out of the bubble.

A substitutive implementation manner of the foregoing step S306 is: when deleting contents from the position of the cursor, removing, a corresponding part of the contents which would move into the line of the cursor according to the deleted contents, out of the next line in the input box.

The embodiments have the advantageous effects as follows: in the case that the distance between the side of the input box and the edge of the contents in the input box is increased, the part of the contents exceeding the boundary of the input box can be displayed, thus being convenient for a user to read the contents. In the case that the distance between the side of the input box and the edge of the contents in the input box is increased, when editing the contents in the input box, the displayed contents are adjusted according to the editing situations, so that the displayed contents are corresponding to the editing situations, thus being convenient for the user to edit.

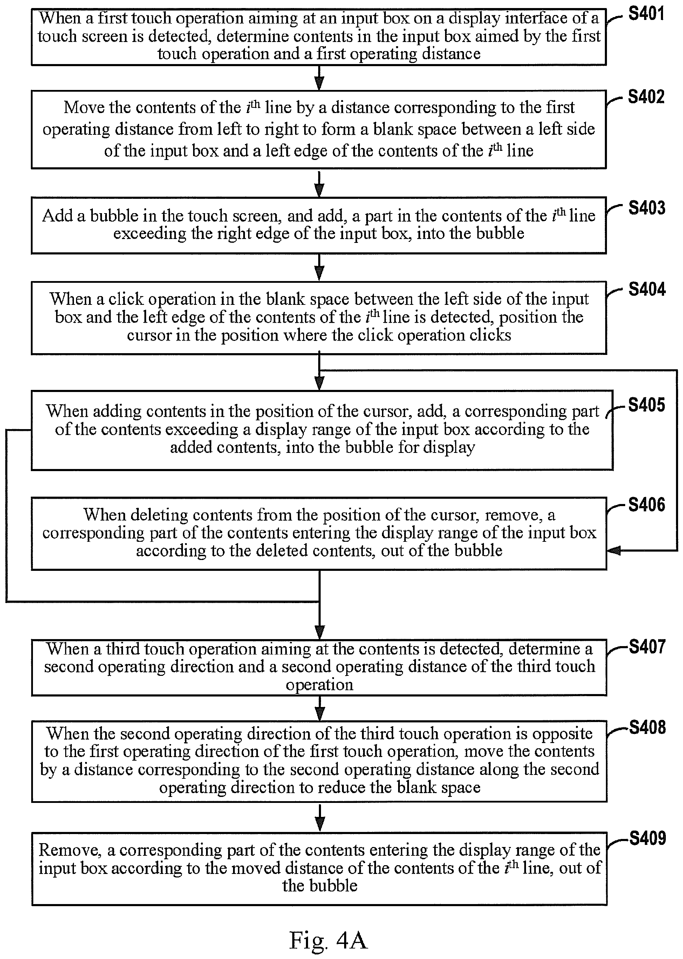

It is supposed that an application scene is as follows: an input box is displayed in a terminal device having a touch screen, character contents being included in the input box, and a user needs to position a cursor between the left side of the input box and the beginning of the contents of the *i*^{th} line in the input box; as shown in Fig. 4A, the following operations are performed.

In step S401, when a first touch operation aiming at an input box on a display interface of the touch screen is detected, contents in the input box aimed by the first touch operation and a first operating distance are determined.

A first operating direction of the first touch operation is consistent with the arraying direction of the contents.

The contents of the *i*^{th} line in the input box aimed by the first touch operation are determined, and the first operating direction being from left to right.

In step S402, the contents of the *i*^{th} line are moved by a distance corresponding to the first operating distance from left to right to form a blank space between a left side of the input box and a left edge of the contents of the *i*^{th} line.

The first operating distance of the first touch operation is S1, the width of the input box is W, and the preset percentage ratio is 20%. When S1<W*20%, the contents of the *i*^{th} line are moved by S1 along the direction from left to right; and when S1 ≥ W*20%, the contents of the *i*^{th} line are moved by W*20% along the direction from left to right.

In step S403, a bubble is added in the touch screen, and a part in the contents of the *i*^{th} line exceeding the right edge of the input box is added into the bubble.

In step S404, when a click operation in the blank space between the left side of the input box and the left edge of the contents of the *i*^{th} line is detected, the cursor is positioned in the position where the click operation clicks.

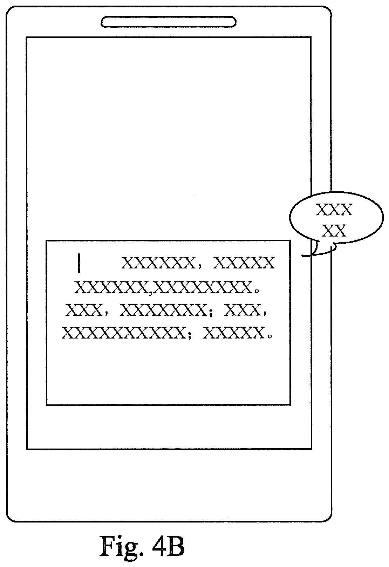

Fig. 4B shows a scene view in the embodiment. Generally, the distance from the left side of the input box of the cursor to the left edge of the contents of the *i*^{th} line is increased, the cursor is positioned between the header of the contents and the input box, i.e., between the left side of the input box and the left edge of the contents of the *i*^{th} line, and a bubble is added at the tailing of the contents of the *i*^{th} line, wherein characters in the contents exceeding the right side of the input box are added in the bubble.

In step S405, when adding contents in the position of the cursor, a corresponding part exceeding a display range of the input box according to the added contents is added into the bubble for display.

In step S406, when deleting contents from the position of the cursor, a corresponding part entering the display range of the input box according to the deleted contents is removed out of the bubble.

In step S407, when a third touch operation aiming at the contents is detected, a second operating direction and a second operating distance of the third touch operation are determined.

A second operating distance of the third touch operation is from right to left.

In step S408, when the second operating direction of the third touch operation is opposite to the first operating direction of the first touch operation, the contents are moved by a distance corresponding to the second operating distance along the second operating direction to reduce the blank space.

For example, the blank space formed between the left side of the input box and the left edge of the contents of the *i*^{th} line is D1, and the second operating distance of the third touch operation is S2; when S2<D1, the contents of the *i*^{th} line are moved by S2 along the direction from right to left; and when S2≥D1, the contents of the *i*^{th} line are moved by D1 along the direction from right to left.

In step S409, a corresponding part entering the display range of the input box according to the moved distance of the contents of the *i*^{th} line is removed out of the bubble.

The technical solutions provided by the embodiments of the invention may include the following advantageous effects: the distance between the side of the input box and the side edge of the input contents is increased according to the detected first touch operation, and the cursor is positioned in the blank space between the side of the input box and the side edge of the input contents according to the second touch operation, so that it is convenient for a user to operate between the side of the input box and the side edge of the input contents, and is also convenient for the user to position the cursor between the side of the input box and the side edge of the input contents.

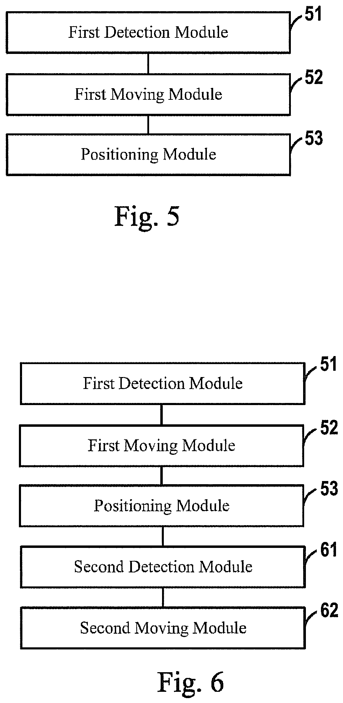

Fig. 5 illustrates a device for positioning a cursor in an input box according to an exemplary embodiment, the device being an apparatus having a touch screen, and including:
a first detection module 51 configured to, when a first touch operation aiming at an input box on a display interface of the touch screen is detected, determine contents in the input box aimed by the first touch operation and a first operating distance, a first operating direction of the first touch operation being consistent with an arraying direction of the contents;
a first moving module 52 configured to move the contents by a distance corresponding to the first operating distance along the first operating direction to form a blank space between a side of the input box and an adjacent side edge of the contents; and
a positioning module 53 configured to, when a second touch operation aiming at the blank space is detected, position the cursor in the position of the blank space.

In one embodiment, as shown in Fig. 6, the foregoing device may also include:
a second detection module 61 configured to, when a third touch operation aiming at the contents is detected, determine a second operating direction and a second operating distance of the third touch operation; and
a second moving module 62 configured to, when the second operating direction is opposite to the first operating direction, move the contents by a distance corresponding to the second operating distance along the second operating direction to reduce the blank space.

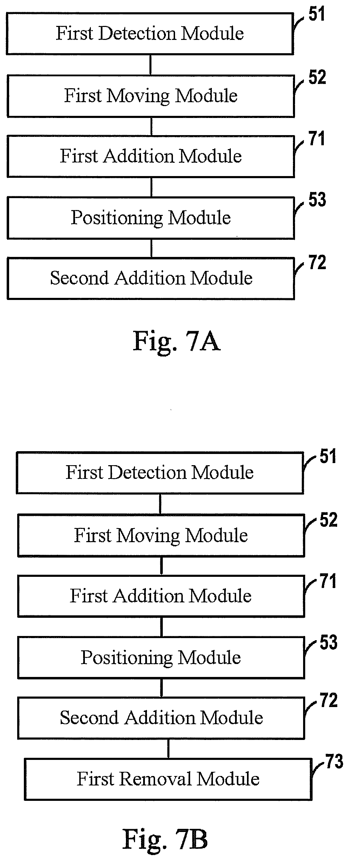

In one embodiment, as shown in Fig. 7A and Fig. 7B, the foregoing device may also include:
a first addition module 71 configured to add a temporary display box in the display interface of the touch screen, and add, a part of the contents exceeding the display range of the input box after moving the contents, into the temporary display box for display.

In one embodiment, as shown in Fig. 7A, the foregoing device further includes:
a second addition module 72 configured to, when adding contents into the position of the cursor, add, a corresponding part of the contents exceeding a display range of the input box according to the added contents, into the temporary display box for display.

In one embodiment, as shown in Fig. 7B, the foregoing device further includes:
a first removal module 73 configured to, when deleting contents from the position of the cursor, remove, a corresponding part of the contents entering the display range of the input box according to the deleted contents, out of the temporary display box.

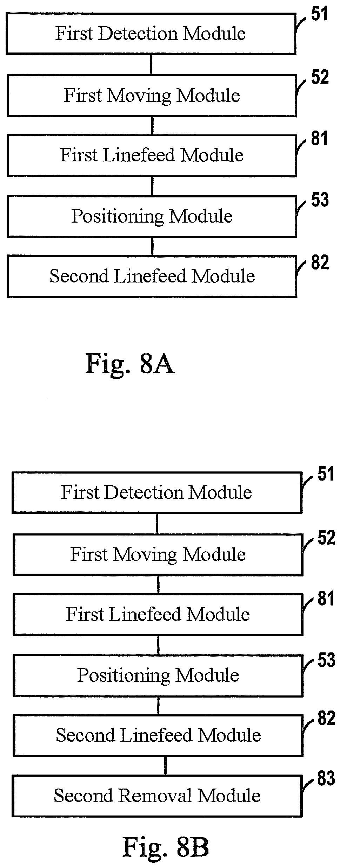

In one embodiment, as shown in Fig. 8A and Fig. 8B, the foregoing device may also include:
a first linefeed module 81 configured to automatically shift, a part of the contents exceeding the display range of the input box after moving the contents, to next line in the input box.

In one embodiment, as shown in Fig. 8A, the foregoing device may also include:
a second linefeed module 82 configured to, when adding contents into the position of the cursor, automatically shift, a corresponding part of the contents exceeding the display range of the input box according to the added contents, to next line in the input box.

In one embodiment, as shown in Fig. 8B, the foregoing device may also include:
a second removal module 83 configured to, when deleting contents from the position of the cursor, remove, a corresponding part moving into the line of the cursor according to the deleted contents, out of the next line in the input box.

In one embodiment, the foregoing first moving module may include:
a first moving submodule configured to, when the first operating distance is less than a first preset distance, move the contents by the first operating distance along the first operating direction; and
a second moving submodule configured to, when the first operating distance is not less than the first preset distance, move the contents by the first preset distance along the first operating direction; and
wherein the first preset distance is equal to a product of a width of the input box in the first operating direction and a preset percentage ratio.

The technical solutions provided by the embodiments of the invention may include the following advantageous effects: the distance between the side of the input box and the side edge of the input contents is increased according to the detected first touch operation, and the cursor is positioned in the blank space between the side of the input box and the side edge of the input contents according to the second touch operation, so that it is convenient for a user to operate between the side of the input box and the side edge of the input contents, and is also convenient for the user to position the cursor between the side of the input box and the side edge of the input contents.

With respect to the devices in the above embodiments, the specific manners for performing operations for individual modules therein have been described in detail in the embodiments regarding the methods, which will not be elaborated herein.

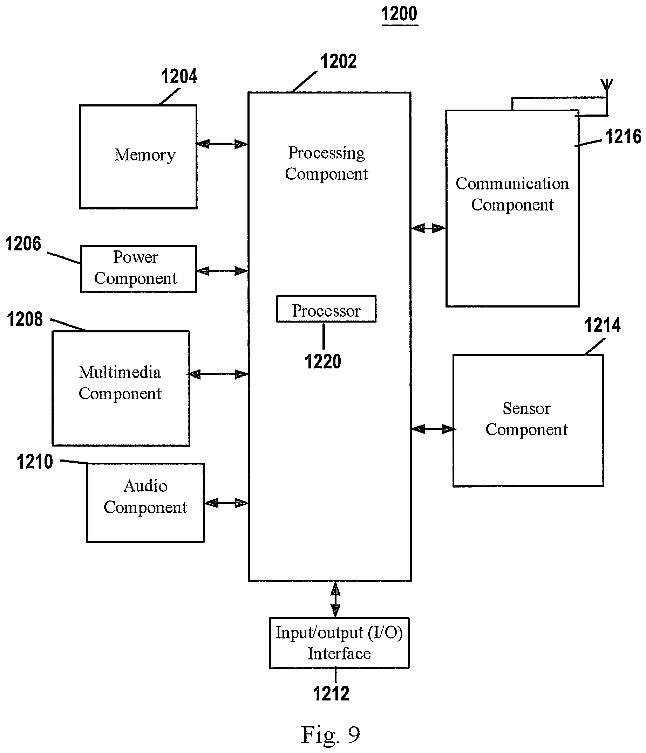

Fig. 9 is a block diagram of a device 1200 for positioning a cursor in an input box, according to an exemplary embodiment. The device is a terminal device having a touch screen. For example, the device 1200 may be a mobile phone, a computer, a digital broadcast terminal, a messaging device, a gaming console, a tablet, a medical device, exercise equipment, a personal digital assistant, and the like.

Referring to Fig. 9, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

## Claims

1. A method for positioning a cursor in an input box applied in a device (1200) having a touch screen (1208) and comprising the steps of:
when a first touch operation aiming at the input box on a display interface of the touch screen is detected, determining (S101, S301, S401) contents in the input box aimed at by the first touch operation, determining a first operating distance of the first touch operation and determining a first operating direction of the first touch operation being consistent with an arraying direction of the contents;
moving (S102, S302) the contents by a distance corresponding to the first operating distance along the first operating direction to form a blank space between a side of the input box and an adjacent side edge of the contents; and
when a second touch operation aiming at said blank space is detected, positioning (S103, S304) the cursor in the position of said blank space.

2. The method according to claim 1, further comprising steps of :
when a third touch operation aiming at the contents is detected, determining (S201) a second operating direction and a second operating distance of the third touch operation; and
when the second operating direction is opposite to the first operating direction, moving (S202) the contents by a distance corresponding to the second operating distance along the second operating direction to reduce the blank space.

3. The method according to claim 1 or 2, further comprising a step of:
adding a temporary display box in the display interface of the touch screen, and adding, a part of the contents exceeding a display range of the input box after moving the contents, into the temporary display box for display (S303); or a step of
automatically shifting, a part of the contents exceeding a display range of the input box after moving the contents, to a next line in the input box.

4. The method according to claim 3, further comprising a step of:
when adding contents into the position of the cursor, adding (S305), a corresponding part of the contents which would exceed the display range of the input box according to the added contents, into the temporary display box for display; or a step of
when deleting contents from the position of the cursor, removing (S306), a corresponding part of the contents which would enter the display range of the input box according to the deleted contents, out of the temporary display box.

5. The method according to claim 3 or 4, further comprising a step of :
when adding contents into the position of the cursor, automatically shifting, a corresponding part of the contents which would exceed the display range of the input box according to the added contents, to the next line in the input box; or
when deleting contents from the position of the cursor, removing, a corresponding part of the contents which would move into the line of the cursor according to the deleted contents, out of the next line in the input box.

6. The method according to any one of claim 1 to 5, the step of moving (S102, S302) the contents by the distance corresponding to the first operating distance along the first operating direction comprising steps of :
when the first operating distance is less than a first preset distance, moving the contents by the first operating distance along the first operating direction; and
when the first operating distance is not less than the first preset distance, moving the contents by the first preset distance along the first operating direction;
wherein the first preset distance is equal to a product of the width of the input box in the first operating direction and a preset percentage ratio.

7. A device (1200) for positioning a cursor in an input box, the device having a touch screen (1208), and comprising:
a first detection module (51) configured to, when a first touch operation aiming at the input box on a display interface of the touch screen is detected, determine contents in the input box aimed by the first touch operation and a first operating distance, a first operating direction of the first touch operation being consistent with an arraying direction of the contents;
a first moving module (52) configured to move the contents by a distance corresponding to the first operating distance along the first operating direction to form a blank space between a side of the input box and an adjacent side edge of the contents; and
a positioning module (53) configured to, when a second touch operation aiming at said blank space is detected, position the cursor in the position of said blank space.

8. The device according to claim 7, further comprising:
a second detection module (61) configured to, when a third touch operation aiming at the contents is detected, determine a second operating direction and a second operating distance of the third touch operation; and
a second moving module (62) configured to, when the second operating direction is opposite to the first operating direction, move the contents by a distance corresponding to the second operating distance along the second operating direction to reduce the blank space.

9. The device according to claim 7 or 8, further comprising:
a first addition module (71) configured to add a temporary display box in the display interface of the touch screen, and add, a part of the contents exceeding a display range of the input box after moving the contents, into the temporary display box for display; or
a first linefeed module (81) configured to automatically shift, a part of the contents exceeding a display range of the input box after moving the contents, to a next line in the input box.

10. The device according to claim 9, further comprising:
a second addition module (71) configured to, when adding contents into the position of the cursor, add, a corresponding part of the contents which would exceed the display range of the input box according to the added contents, into the temporary display box for display; or,
a first removal module (73) configured to, when deleting contents from the position of the cursor, remove, a corresponding part of the contents which would enter the display range of the input box according to the deleted contents, out of the temporary display box.

11. The device according to claim 9 or 10, further comprising:
a second linefeed module (82) configured to, when adding contents into the position of the cursor, automatically shift, a corresponding part of the contents which would exceed the display range of the input box according to the added contents, to the next line in the input box; or
a second removal module (83) configured to, when deleting contents from the position of the cursor, remove, a corresponding part of the contents which would move into the line of the cursor according to the deleted contents, out of the next line in the input box.

12. The device according to any one of claims 7 to 11, the first moving module (52) comprising:
a first moving submodule configured to, when the first operating distance is less than a first preset distance, move the contents by the first operating distance along the first operating direction; and
a second moving submodule configured to, when the first operating distance is not less than the first preset distance, move the contents by the first preset distance along the first operating direction;
wherein the first preset distance is equal to a product of the width of the input box in the first operating direction and a preset percentage ratio.

13. A computer program including instructions for executing the steps of a method for positioning a cursor according to any one of claims 1 to 6 when said program is executed by a computer.

14. A recording medium readable by a computer and having recorded thereon a computer program including instructions for executing the steps of a method for positioning a cursor according to any one of claims 1 to 6.

## Patentansprüche

1. Verfahren zum Positionieren eines Cursors in einem Eingabefeld, das in einer Vorrichtung (1200), die einen Touchscreen (1208) aufweist, angewandt wird und umfassend die Schritte des:
wenn eine erste Touch-Bedienung, die auf das Eingabefeld auf einer Anzeigeschnittstelle des Touchscreens abzielt, detektiert wird, Bestimmens (S101, S301, S401) von Inhalten in dem Eingabefeld, auf welches die erste Touch-Bedienung abzielt, Bestimmens einer ersten Bedienstrecke der ersten Touch-Bedienung und Bestimmens des Übereinstimmens einer ersten Bedienrichtung der ersten Touch-Bedienung mit einer Anordnungsrichtung der Inhalte,
Bewegens (S102, S302) der Inhalte eine Strecke weit, die der ersten Bedienstrecke entspricht, entlang der ersten Bedienrichtung, um zwischen einer Seite des Eingabefelds und einer benachbarten Seitenkante der Inhalte einen leeren Bereich zu bilden, und,
wenn eine zweite Touch-Bedienung, die auf den leeren Bereich abzielt, detektiert wird, Positionieren (S103, S304) des Cursors in der Position des leeren Bereichs.

2. Verfahren nach Anspruch 1, ferner umfassend die Schritte des:
wenn eine dritte Touch-Bedienung, die auf die Inhalte abzielt, detektiert wird, Bestimmens (S201) einer zweiten Bedienrichtung und einer zweiten Bedienstrecke der dritten Touch-Bedienung, und,
wenn die zweite Bedienrichtung der ersten Bedienrichtung entgegengesetzt ist, Bewegens (S202) der Inhalte eine Strecke weit, die der zweiten Bedienstrecke entspricht, entlang der zweiten Bedienrichtung, um den leeren Bereich zu verkleinern.

3. Verfahren nach Anspruch 1 oder 2, ferner umfassend einen Schritt des:
Hinzufügens eines temporären Anzeigefelds in der Anzeigeschnittstelle des Touchscreens und des Hinzufügens eines Teils der Inhalte, der nach Bewegen der Inhalte einen Anzeigebereich des Eingabefelds überschreitet, in das temporäre Anzeigefeld zur Anzeige (S303), oder einen Schritt des:
automatischen Verschiebens eines Teils der Inhalte, der nach Bewegen der Inhalte einen Anzeigebereich des Eingabefelds überschreitet, zu einer nächsten Zeile in dem Eingabefeld.

4. Verfahren nach Anspruch 3, ferner umfassend einen Schritt:
wenn in die Position des Cursors Inhalte hinzugefügt werden, des Hinzufügens (S305) eines entsprechenden Teils der Inhalte, der gemäß den hinzugefügten Inhalten den Anzeigebereich des Eingabefelds überschreiten würde, in das temporäre Anzeigefeld zur Anzeige, oder einen Schritt,
wenn Inhalte von der Position des Cursors gelöscht werden, des Entfernens (S306) eines entsprechenden Teils der Inhalte, der gemäß den gelöschten Inhalten in den Anzeigebereich des Eingabefelds rücken würde, aus dem temporären Anzeigefeld.

5. Verfahren nach Anspruch 3 oder 4, ferner umfassend einen Schritt:
wenn Inhalte in die Position des Cursors hinzugefügt werden, des automatischen Verschiebens eines entsprechenden Teils der Inhalte, der gemäß den hinzugefügten Inhalten den Anzeigebereich des Eingabefelds überschreiten würde, zu der nächsten Zeile in dem Eingabefeld, oder,
wenn Inhalte von der Position des Cursors gelöscht werden, des Entfernens eines entsprechenden Teils der Inhalte, der sich gemäß den gelöschten Inhalten in die Zeile des Cursors bewegen würde, aus der nächsten Zeile in dem Eingabefeld.

6. Verfahren nach einem beliebigen der Ansprüche 1 bis 5, der Schritt des Bewegens (S102, S302) der Inhalte die Strecke weit, die der ersten Bedienstrecke entspricht, entlang der ersten Bedienrichtung umfassend die Schritte des:
wenn die erste Bedienstrecke kleiner als eine erste voreingestellte Strecke ist, Bewegens der Inhalte die erste Bedienstrecke weit entlang der ersten Bedienrichtung, und,
wenn die erste Bedienstrecke nicht kleiner als die erste voreingestellte Strecke ist, Bewegens der Inhalte die erste voreingestellte Strecke weit entlang der ersten Bedienrichtung,
wobei die erste voreingestellte Strecke gleich einem Produkt aus der Breite des Eingabefelds in der ersten Bedienrichtung und einem voreingestellten Prozentwert ist.

7. Vorrichtung (1200) zum Positionieren eines Cursors in einem Eingabefeld, wobei die Vorrichtung einen Touchscreen (1208) aufweist und umfassend:
ein erstes Detektiermodul (51), das dazu ausgebildet ist, wenn eine erste Touch-Bedienung, die auf das Eingabefeld auf einer Anzeigeschnittstelle des Touchscreens abzielt, detektiert wird, Inhalte in dem Eingabefeld, auf das die erste Touch-Bedienung abzielt, und eine erste Bedienstrecke zu bestimmen, wobei eine erste Bedienrichtung der ersten Touch-Bedienung mit einer Anordnungsrichtung der Inhalte übereinstimmt,
ein erstes Bewegungsmodul (52), das dazu ausgebildet ist, die Inhalte eine Strecke weit, die der ersten Bedienstrecke entspricht, entlang der ersten Bedienrichtung zu bewegen, um einen leeren Bereich zwischen einer Seite des Eingabefelds und einer benachbarten Seitenkante der Inhalte zu bilden, und
ein Positioniermodul (53), das dazu ausgebildet ist, wenn eine zweite Touch-Bedienung, die auf den leeren Bereich abzielt, detektiert wird, den Cursor in der Position des leeren Bereiches zu positionieren.

8. Vorrichtung nach Anspruch 7, ferner umfassend:
ein zweites Detektiermodul (61), das dazu ausgebildet ist, wenn eine dritte Touch-Bedienung, die auf die Inhalte abzielt, detektiert wird, eine zweite Bedienrichtung und eine zweite Bedienstrecke der dritten Touch-Bedienung zu bestimmen, und
ein zweites Bewegungsmodul (62), das dazu ausgebildet ist, wenn die zweite Bedienrichtung der ersten Bedienrichtung entgegengesetzt ist, die Inhalte eine Strecke weit, die der zweiten Bedienstrecke entspricht, entlang der zweiten Bedienrichtung zu bewegen, um den leeren Bereich zu verkleinern.

9. Vorrichtung nach Anspruch 7 oder 8, ferner umfassend:
ein erstes Hinzufügemodul (71), das dazu ausgebildet ist, ein temporäres Anzeigefeld in der Anzeigeschnittstelle des Touchscreens hinzuzufügen und einen Teil der Inhalte, der nach Bewegen der Inhalte einen Anzeigebereich des Eingabefelds überschreitet, in das temporäre Anzeigefeld zur Anzeige hinzuzufügen, oder
ein erstes Zeilenvorschubmodul (81), das dazu ausgebildet ist, einen Teil der Inhalte, der nach Bewegen der Inhalte einen Anzeigebereich des Eingabefelds überschreitet, automatisch zu einer nächsten Zeile in dem Eingabefeld zu verschieben.

10. Vorrichtung nach Anspruch 9, ferner umfassend:
ein zweites Hinzufügemodul (71), das dazu ausgebildet ist, wenn Inhalte in die Position des Cursors hinzugefügt werden, einen entsprechenden Teil der Inhalte, der gemäß den hinzugefügten Inhalten den Anzeigebereich des Eingabefelds überschreiten würde, in das temporäre Eingabefeld zur Anzeige hinzuzufügen, oder
ein erstes Entfernungsmodul (73), das dazu ausgebildet ist, wenn Inhalte von der Position des Cursors gelöscht werden, einen entsprechenden Teil der Inhalte, der gemäß den gelöschten Inhalten in den Anzeigebereich des Eingabefelds rücken würde, aus dem temporären Anzeigefeld zu entfernen.

11. Vorrichtung nach Anspruch 9 oder 10, ferner umfassend:
ein zweites Zeilenvorschubmodul (82), das dazu ausgebildet ist, wenn Inhalte in die Position des Cursors hinzugefügt werden, einen entsprechenden Teil der Inhalte, der gemäß den hinzugefügten Inhalten den Anzeigebereich des Eingabefelds überschreiten würde, automatisch zu der nächsten Zeile in dem Eingabefeld zu verschieben, oder
ein zweites Entfernungsmodul (83), das dazu ausgebildet ist, wenn Inhalte von der Position des Cursors gelöscht werden, einen entsprechenden Teil der Inhalte, der sich gemäß den gelöschten Inhalten in die Zeile des Cursors bewegen würde, aus der nächsten Zeile in dem Eingabefeld zu entfernen.

12. Vorrichtung nach einem beliebigen der Ansprüche 7 bis 11, das erste Bewegungsmodul (52) umfassend:
ein erstes Bewegungsuntermodul, das dazu ausgebildet ist, wenn die erste Bedienstrecke kleiner als eine erste voreingestellte Strecke ist, die Inhalte die erste Bedienstrecke weit entlang der ersten Bedienrichtung zu bewegen, und
ein zweites Bewegungsuntermodul, das dazu ausgebildet ist, wenn die erste Bedienstrecke nicht kleiner als die erste voreingestellte Strecke ist, die Inhalte die erste voreingestellte Strecke weit entlang der ersten Bedienrichtung zu bewegen,
wobei die erste voreingestellte Strecke gleich einem Produkt aus der Breite des Eingabefelds in der ersten Bedienrichtung und einem voreingestellten Prozentwert ist.

13. Rechnerprogramm, umfassend Anweisungen zum Ausführen der Schritte eines Verfahrens zum Positionieren eines Cursors nach einem beliebigen der Ansprüche 1 bis 6, wenn das Programm durch einen Rechner ausgeführt wird.

14. Aufzeichnungsmedium, das von einem Rechner lesbar ist und darauf aufgezeichnet ein Rechnerprogramm aufweist, umfassend Anweisungen zum Ausführen der Schritte eines Verfahrens zum Positionieren eines Cursors nach einem beliebigen der Ansprüche 1 bis 6.

## Revendications

1. Procédé de positionnement d'un curseur dans une zone de saisie appliquée dans un dispositif (1200) présentant un écran tactile (1208), comprenant les étapes ci-dessous consistant à :
lorsqu'une première opération tactile visant la zone de saisie sur une interface d'affichage de l'écran tactile est détectée, déterminer (S101, S301, S401) des contenus dans la zone de saisie visée par la première opération tactile, déterminer une première distance de fonctionnement de la première opération tactile et déterminer une première direction de fonctionnement de la première opération tactile qui est conforme à une direction d'agencement des contenus ;
déplacer (S102, S302) les contenus d'une distance correspondant à la première distance de fonctionnement le long de la première direction de fonctionnement, en vue de former un espace vide entre un côté de la zone de saisie et un bord latéral adjacent des contenus ; et
lorsqu'une deuxième opération tactile visant ledit espace vide est détectée, positionner (S103, S304) le curseur à la position dudit espace vide.

2. Procédé selon la revendication 1, comprenant en outre les étapes ci-dessous consistant à :
lorsqu'une troisième opération tactile visant les contenus est détectée, déterminer (S201) une seconde direction de fonctionnement et une seconde distance de fonctionnement de la troisième opération tactile ; et
lorsque la seconde direction de fonctionnement est opposée à la première direction de fonctionnement, déplacer (S202) les contenus d'une distance correspondant à la seconde distance de fonctionnement le long de la seconde direction de fonctionnement en vue de réduire l'espace vide.

3. Procédé selon la revendication 1 ou 2, comprenant en outre l'étape ci-dessous consistant à :
ajouter une zone d'affichage temporaire dans l'interface d'affichage de l'écran tactile, et ajouter une partie des contenus dépassant une plage d'affichage de la zone de saisie, après avoir déplacé les contenus, dans la zone d'affichage temporaire, à des fins d'affichage (S303) ; ou comprenant l'étape ci-dessous consistant à :
décaler automatiquement une partie des contenus dépassant une plage d'affichage de la zone de saisie, après avoir déplacé les contenus, vers une ligne successive dans la zone de saisie.

4. Procédé selon la revendication 3, comprenant en outre l'étape ci-dessous consistant à :
lors de l'ajout de contenus à la position du curseur, ajouter (S305) une partie correspondante des contenus qui dépasserait la plage d'affichage de la zone de saisie selon les contenus ajoutés, dans la zone d'affichage temporaire à des fins d'affichage ; ou l'étape ci-dessous consistant à
lors de la suppression de contenus de la position du curseur, enlever (S306), de la zone d'affichage temporaire, une partie correspondante des contenus qui entrerait dans la plage d'affichage de la zone de saisie, selon les contenus supprimés.

5. Procédé selon la revendication 3 ou 4, comprenant en outre l'étape ci-dessous consistant à :
lors de l'ajout de contenus à la position du curseur, déplacer automatiquement une partie correspondante des contenus qui dépasserait la plage d'affichage de la zone de saisie selon les contenus ajoutés, à la ligne successive dans la zone de saisie ; ou
lors de la suppression de contenus de la position du curseur, enlever, de la ligne successive dans la zone de saisie, une partie correspondante des contenus qui se déplacerait vers la ligne du curseur selon les contenus supprimés.

6. Procédé selon l'une quelconque des revendications 1 à 5, dans lequel l'étape de déplacement (S102, S302) des contenus de la distance correspondant à la première distance de fonctionnement le long de la première direction de fonctionnement comprend les étapes ci-dessous consistant à :
lorsque la première distance de fonctionnement est inférieure à une première distance prédéfinie, déplacer les contenus de la première distance de fonctionnement le long de la première direction de fonctionnement ; et
lorsque la première distance de fonctionnement n'est pas inférieure à la première distance prédéfinie, déplacer les contenus de la première distance prédéfinie le long de la première direction de fonctionnement ;
dans lequel la première distance prédéfinie est égale à un produit de la largeur de la zone de saisie dans la première direction de fonctionnement et d'un rapport en pourcentage prédéfini.

7. Dispositif (1200) destiné à positionner un curseur dans une zone de saisie, le dispositif présentant un écran tactile (1208), et comprenant :
un premier module de détection (51) configuré de manière à, lorsqu'une première opération tactile visant la zone de saisie sur une interface d'affichage de l'écran tactile est détectée, déterminer des contenus dans la zone de saisie visée par la première opération tactile, et une première distance de fonctionnement, une première direction de fonctionnement de la première opération tactile étant conforme à une direction d'agencement des contenus ;
un premier module de déplacement (52) configuré de manière à déplacer les contenus d'une distance correspondant à la première distance de fonctionnement le long de la première direction de fonctionnement, en vue de former un espace vide entre un côté de la zone de saisie et un bord latéral adjacent des contenus ; et
un module de positionnement (53) configuré de manière à, lorsqu'une deuxième opération tactile visant ledit espace vide est détectée, positionner le curseur à la position dudit espace vide.

8. Dispositif selon la revendication 7, comprenant en outre :
un second module de détection (61) configuré de manière à, lorsqu'une troisième opération tactile visant les contenus est détectée, déterminer une seconde direction de fonctionnement et une seconde distance de fonctionnement de la troisième opération tactile ; et
un second module de déplacement (62) configuré de manière à, lorsque la seconde direction de fonctionnement est opposée à la première direction de fonctionnement, déplacer les contenus d'une distance correspondant à la seconde distance de fonctionnement le long de la seconde direction de fonctionnement en vue de réduire l'espace vide.

9. Dispositif selon la revendication 7 ou 8, comprenant en outre :
un premier module d'ajout (71) configuré de manière à ajouter une zone d'affichage temporaire dans l'interface d'affichage de l'écran tactile, et à ajouter une partie des contenus dépassant une plage d'affichage de la zone de saisie, après avoir déplacé les contenus, dans la zone d'affichage temporaire, à des fins d'affichage ; ou
un premier module de saut de ligne (81) configuré de manière à décaler automatiquement une partie des contenus dépassant une plage d'affichage de la zone de saisie, après avoir déplacé les contenus, vers une ligne successive dans la zone de saisie.

10. Dispositif selon la revendication 9, comprenant en outre :
un second module d'ajout (71) configuré de manière à, lors de l'ajout de contenus à la position du curseur, ajouter une partie correspondante des contenus qui dépasserait la plage d'affichage de la zone de saisie selon les contenus ajoutés, à la zone d'affichage temporaire à des fins d'affichage ; ou
un premier module de suppression (73) configuré de manière à, lors de la suppression de contenus de la position du curseur, enlever, de la zone d'affichage temporaire, une partie correspondante des contenus qui entrerait dans la plage d'affichage de la zone de saisie, selon les contenus supprimés.

11. Dispositif selon la revendication 9 ou 10, comprenant en outre :
un second module de saut de ligne (82) configuré de manière à, lors de l'ajout de contenus à la position du curseur, déplacer automatiquement une partie correspondante des contenus qui dépasserait la plage d'affichage de la zone de saisie selon les contenus ajoutés, à la ligne successive dans la zone de saisie ; ou
un second module de suppression (83) configuré de manière à, lors de la suppression de contenus de la position du curseur, enlever, de la ligne successive dans la zone de saisie, une partie correspondante des contenus qui se déplacerait vers la ligne du curseur selon les contenus supprimés.

12. Dispositif selon l'une quelconque des revendications 7 à 11, dans lequel le premier module de déplacement (52) comprend :
un premier sous-module de déplacement configuré de manière à, lorsque la première distance de fonctionnement est inférieure à une première distance prédéfinie, déplacer les contenus de la première distance de fonctionnement le long de la première direction de fonctionnement ; et
un second sous-module de déplacement configuré de manière à, lorsque la première distance de fonctionnement n'est pas inférieure à la première distance prédéfinie, déplacer les contenus de la première distance prédéfinie le long de la première direction de fonctionnement ;
dans lequel la première distance prédéfinie est égale à un produit de la largeur de la zone de saisie dans la première direction de fonctionnement et d'un rapport en pourcentage prédéfini.

13. Programme informatique incluant des instructions pour exécuter les étapes d'un procédé de positionnement d'un curseur selon l'une quelconque des revendications 1 à 6, lorsque ledit programme est exécuté par un ordinateur.

14. Support d'enregistrement lisible par un ordinateur et sur lequel est enregistré un programme informatique incluant des instructions pour exécuter les étapes d'un procédé de positionnement d'un curseur selon l'une quelconque des revendications 1 à 6.
